# EUROPEAN PATENT SPECIFICATION

(11) **EP 1 644 542 B1**
(45) Date of publication and mention of the grant of the patent: **02.11.2011**
(21) Application number: 04743931.0
(22) Date of filing: 14.07.2004
(51) Int. Cl.: C22B 3/06, C22B 3/18, C22B 15/00

(54) **OXIDATIVE LEACH PROCESS**
OXIDIERENDES AUSLAUGUNGSVERFAHREN
PROCEDE DE LIXIVIATION OXYDANTE

(30) Priority: 15.07.2003 ZA 200305433
(43) Date of publication of application: 12.04.2006
(73) Proprietor: MINTEK, Randburg 2194, Gauteng (ZA)
(72) Inventor: VAN STADEN, Petrus, Johannes, Edenvale 1609, Gauteng (ZA)
(74) Representative: Lawson, Alison Christina
(86) International application number: PCT/IB2004/002269
(87) International publication number: WO 2005/005672

(56) References cited:
- WO-A-00/29629
- WO-A-03/038137
- US-A- 6 143 259
- US-B1- 6 537 440
- VAN STADEN P.J.: "The MINTEK/BACTECH copper bioleach process" TECHNICAL PROCEEDINGS ALTA 1998 COPPER SULPHIDES SYMPOSIUM, BRISBANE MARRIOTT HOTE, QUEENSLAND, AUSTRALIA, 1998, pages 0-13, XP009038589 cited in the application
- HIROYOSHI N ET AL: "A model for ferrous-promoted chalcopyrite leaching" HYDROMETALLURGY, ELSEVIER SCIENTIFIC PUBLISHING CY. AMSTERDAM, NL, vol. 57, no. 1, August 2000 (2000-08), pages 31-38, XP004207818 ISSN: 0304-386X

## Description

### FIELD OF THE INVENTION

This invention relates to the oxidative leaching of sulphide materials, in particular to a process where ferric ions are generated by oxidation of ferrous ions and the ferric ions are then used in a reactor to effect the leaching.

### BACKGROUND TO THE INVENTION

Ferric iron (Fe ³⁺) in acidic medium is widely applied in the minerals industry as an oxidative leach medium to material that needs to be oxidised in order to become solubilised. This is always one of the early steps in a hydrometallurgical extraction process since once metals have been solubilised their separation and purification can proceed according to a large number of established hydrometallurgical unit operations.

Although ferric iron has been found to be a very effective and convenient oxidising agent in acidic water media, the ultimate driving force for oxidation (i.e. the ultimate electron acceptor in scientific terms) is usually provided by oxygen, either in the form of atmospheric air or as a purer form of oxygen. This comes about by the fact that oxygen would be supplied to the process to oxidise soluble iron from a low oxidation state (ferrous ions, Fe ²⁺) to a high oxidation state (ferric ions, Fe³⁺). The ferric ion, also being an electron acceptor, in turn carries the oxidative power to the mineral where it reacts with the mineral according to mechanisms that are more complex than the stoiciometric equations reveal. The oxidised mineral dissolves and the iron returns to the ferrous state, which can once again be oxidised by oxygen to ferric iron, and so the cycle continues. For reasons of physics and chemistry, the direct reaction between gaseous oxygen and solid mineral surfaces in the complete absence of soluble iron is economically less feasible.

However, special conditions are required to achieve the reaction between soluble iron and oxygen in a cost effective manner. One possible approach is to use a high temperature, typically above the normal boiling point of water, in a pressurised reaction vessel to achieve an acceptable rate of reaction and extent of oxygen utilisation in the reaction between oxygen and soluble iron. Another approach has been to utilise special mineral-metabolising bacteria, which catalyse and hence accelerate the reaction between oxygen and iron under more moderate conditions of temperature, at atmospheric pressure.

Many minerals can be oxidised to various extents, depending on the conditions chosen. For example, sulphide minerals consist of metal atoms bound to sulphur atoms. Depending on the conditions, the associated sulphur atom could be oxidised from its sulphide form (i.e. the form in which it occurs naturally in the mineral), to elemental sulphur or to dissolved sulphate ions. In both cases, the metal ions will be solubilised, which is the ultimate aim of oxidation. However, the extent of oxidation required, and hence the amount of oxygen required and therefore the amount of energy required to supply oxygen to the process, can vary greatly depending on the ultimate state of the sulphur atoms. It is often not an essential process requirement that the sulphur should necessarily end up in the one form or the other, and in those cases it would be more advantageous if the sulphur reports to the product in its elemental state, opposed to sulphate, since that would require less energy to achieve the same goal, namely dissolution of the metal. However, the conditions required for achieving an efficient reaction between oxygen and soluble iron (discussed above) may be such as to favour the formation of sulphate and not to elemental sulphur during the leaching of the mineral, if the mineral leaching occurs in the same vessel as the oxidation of iron.

It therefore holds advantages if the leaching of the mineral (i.e. the reaction between the ferric ions and the mineral) and the oxidation of the iron (i.e. the reaction between ferrous iron and oxygen) occur in separate vessels, because the conditions for the two reactions can then be optimised independently, and the conditions for the leaching of the mineral could be chosen such as to favour a greater extent of elemental sulphur, opposed to sulphate, formation than would have been the case under the conditions chosen for the iron oxidation.

In the patent by Aragones⁽¹⁾, a process is described in which bacteria, attached to an inert solid in one vessel, are used to oxidise ferrous iron in solution to ferric iron. The ferric iron solution is then passed to a separate vessel in which the copper sulphide or a concentrate thereof is contacted with the ferric-iron-bearing solution, to effect leaching. The copper that dissolves into the liquor phase as a result of the leaching is then extracted from the liquor with a solvent (for purification and subsequent recovery in saleable form). If the bacterial oxidation of the ferrous iron were allowed to occur in the leach vessel, with oxygen being supplied to the leach vessel, the bacteria would come into contact with the elemental sulphur formed during the leaching of the mineral, and would therefore oxidise the sulphur further to sulphate.

In the patent by Sharp et al ⁽²⁾ a "BIOBALL"-Vat-leach process for minerals leaching is described and the use of a column, separate from and outside of the leach vessel, or vat, is shown in which ferrous iron is bacterially regenerated to ferric iron, with the ferric-iron solution being recycled to the vat to effect further leaching of the mineral. It is also shown how solvent extraction can be used to recover the dissolved metal from solution, in a circuit separate of the iron oxidation column.

For the sake of convenience, the vessel in whatever shape or form in which the ferrous iron is converted to ferric iron can be named a "Ferric Iron Generator", or FIG. The ferric iron could be generated with the aid of iron-oxidising bacteria, or by chemical means, such as would be achieved by the addition of any oxidant stronger than ferric iron such as hydrogen peroxide, or by electrolytic means. In terms of configuration, the FIG could include an air, mechanically or hydraulically agitated vessel. In case of bacterial iron oxidation, the bacteria could occur freely in solution, or immobilised partly or completely by attachment to inert solid surfaces in the FIG.

However, an essential aspect of the process proposed here is that the support particles should rather be kept fluidised, or some other provision should be made for permitting the precipitation of iron to occur in the FIG without the precipitate getting lodged between the support particles and eventually blocking the FIG. Alternatively the FIG should be of sufficiently low cost construction that it would be feasible to keep on renewing or extending the FIG, such as would be the case if a pile of low cost bacterial support particles are used as FIG, with the pile being continuously extended as parts of it becomes unusable due to iron precipitation in it.

An important aspect of these oxidation processes is the fate of acid and iron in a process utilising a FIG. In order to devise a complete workable FIG-based process for the extraction and recovery of metals from sulphide mineral, at least the following steps are required:
1. The mineral leach step (i.e. where the mineral is contacted with the ferric iron).
2. The bacterial iron oxidation step (i.e. the FIG)
3. A metals winning step, where the valuable metal is won from solution in saleable form. In the case of metals such as copper and zinc, the metal is commonly produced in the form of metal cathodes, by the application of electrical energy (electrowinning), which is further typically (but need not necessarily be) preceded by a solvent extraction step, for purposes such as obtaining a solution in which the valuable metal occurs in purer and more concentrated form than it does in the leach solution emanating from the mineral leach step. However, cementation of the metal from solution, using for example scrap iron or zinc powder, is also sometimes practised.

In each of the above process steps, chemical reactions take place which involve, apart from the valuable component and other species, also acid and iron. These reactions are inter-related, for example the oxidation of iron from the ferrous to the ferric form is net acid consuming, whereas the hydrolysis and precipitation of ferric iron (to prevent iron build-up in the system) and the metals winning step are net acid producing. Because the various steps occur in separate vessels, the acid produced by acid producing reactions is not necessarily available for the acid consuming reactions, and as a result the economics of the process could be negatively affected by the potential need for acid addition in some steps and acid neutralisation in others in order to control the acid strength within the various steps within the process requirements.

In the patents of both Aragones⁽¹⁾ and Sharp et al ⁽²⁾, the FIG is envisaged as a vessel in which the bacteria are immobilised on a packed bed of inert solids. However, the applicant believes that such a FIG is not the optimal arrangement to use for the leaching of mineral that contains iron, with the reasoning being as follows:
The established hydrometallurgical practice for purging iron from a process is to add acid-neutralisation agent, such as lime and/or limestone, to a solution that contains the iron in ferric form, which causes the iron to precipitate in solid form, so that it could be removed from the liquor phase, typically by sedimentation and/or filtration. Specifically the ferric form of iron is favoured for that step, since ferric iron is much less soluble, and therefore precipitates much more readily, than ferrous iron. The ferric precipitate is also less likely to be re-dissolved after disposal than a ferrous-iron precipitate would be.

Therefore, the most suitable location in a FIG-based process for purging excess iron would be inside the FIG, because that is where the iron occurs predominantly in ferric form. Furthermore, by combining the iron oxidation and iron precipitation reactions in one vessel, the acid consumption of the iron oxidation reaction (from ferrous to ferric iron), could reduce or eliminate the need for the addition of acid-neutralisation agent to neutralise the acid generated by the iron hydrolysis reaction. However, that would not be permissible in a FIG that is packed with solid bacterial-support particles, because at least part of the iron that hydrolyses will also precipitate, and the iron precipitate would eventually choke up such a packed-bed-FIG. A FIG filled with solid bacteria support is therefore not an optimal arrangement.

In his Alta-98 paper and presentation, Van Staden ⁽³⁾ alluded to the possibility of optimising over-all process chemistry by the use of a FIG, but no examples of process arrangements were given that would permit the practical achievement of such optimisation.

Another important aspect of leaching of sulphide materials revolves around control of the redox potential. In one Mintek patent⁽⁴⁾, a process is claimed for the accelerated leaching of chalcopyrite by utilising a low redox potential (i.e. a low ratio of ferric-to-ferrous ions) in the leach stage. In another Mintek patent⁽⁵⁾, various mechanisms are proposed whereby the redox potential could be controlled, including manipulation of the oxygen or carbon dioxide supply, nutrients supply or temperature. Apart from chalcopyrite leaching, another reason for wishing to control the redox potential might be to effect selective leaching of only certain components of a minerals mixture, by controlling the redox potential within the limits within which certain components of the mixture would leach and others would not.

### OBJECT OF THE INVENTION

It is an object of this invention to provide a process for the extraction and recovery of metals from sulphide minerals that alleviates at least some of the abovementioned problems.

### SUMMARY OF THE INVENTION

In accordance with this invention there is provided a process for the indirect oxidative leaching of copper from a feed material which contains copper in sulphide form, which includes at least one acid producing step and at least one acid consuming step which occur in at least two physically separated vessels; the process including in sequence, the steps of:
- a): oxidising the copper sulphide material with ferric iron to transfer oxidative power to the copper sulphide material to leach the copper therefrom and to reduce the ferric iron to ferrous iron, with the ferrous iron and the leached copper being contained in a leach product stream;
- b): an acid producing step which comprises recovering copper from the leach product stream by removing at least part of the leached copper with a solvent extraction step and forming an acid in the solvent extraction product stream;
- c): an acid consuming step in a vessel physically separate from the vessels in which reactions (a) and (b) occur, and which utilises acid from step b) to oxidise the ferrous iron to ferric iron in a Ferric Iron Generator and providing the ferric iron to step a) again;
wherein the process further includes the hydrolysis of iron to yield aqueous ferric hydroxide or an aqueous precursor of any possible iron oxy-hydroxide or jarosite, according to the following chemical reaction:

0.5Fe₂(SO₄)₃ + 3H₂O → Fe(OH)_{3(aq)} + 1.5H₂SO₄

in which Fe₂(SO₄)₃ is ferric sulphate; H₂O is water; Fe(OH)_{3(aq)} is the ferric hydroxide in solution; H₂SO₄ is sulphuric acid, and the ratio of moles of acid formed per moles of iron hydrolysed is the same for the formation of any of the iron oxy-hydroxides or jarosites;
and the removal of excess iron from the process by means of precipitation of the aqueous ferric hydroxide, or the aqueous precursor of any possible iron oxy-hydroxide or jarosite, according to the following general chemical reaction which can occur either completely or partly in the Ferric Iron Generator, or completely in any another part of the process: 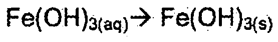 in which Fe(OH)_{3(aq)} is the ferric hydroxide in solution; and Fe(OH)₃₍ₛ₎ is the precipitated ferric hydroxide.

There is further provided for the Ferric Iron Generator to include bacterially assisted oxidation of ferrous iron to ferric iron.

There is also provided for the ferric iron to be used in the form of ferric sulphate, ferric chloride, or ferric nitrate.

There is also provided for step a) to involve the following chemical reaction: 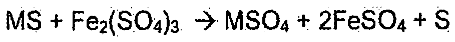 where MS is a desired metal sulphate, Fe₂(SO₄)₃ is ferric sulphate; MSO₄ is metal sulphate in solution, FeSO₄ is ferrous sulphate and S is elemental Sulphur.

There is also provided for step b) to involve the following chemical reaction: 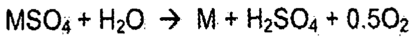 where MSO₄ is metal sulphate in solution; H₂O is water; M is the recovered metal; H₂SO₄ is sulphuric acid; and O₂ is oxygen.

There is also provided for step c) to involve the following chemical reaction: 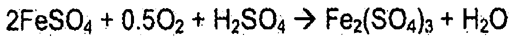 where FeSO₄ is ferrous sulphate; O₂ is oxygen; H₂SO₄ is sulphuric acid; Fe₂(SO₄)₃ is ferric sulphate; and H₂O is water.

There is also provided for the Ferric Iron Generator to include a fluidised particle bed or mechanically stirred particle bed, and for some of the bacteria to be attached to the particles and for some of the bacteria to occur freely in solution.

There is also provided for the Ferric Iron Generator to be a mineral dump or heap of ore or other suitable material, which could be discarded and replaced when it becomes saturated with precipitated iron.

A further feature of the invention provides for redox potential of the leach vessel to be controlled by means of the rate of ferric iron supply to the leach vessel, and for the rate of ferric iron supply to be controlled by means of control over the ferric-iron to ferrous-iron ratio maintained in the Ferric Iron Generator and supplied to the leach vessel, alternatively by controlling the volumetric supply rate of ferric iron to the leach vessel.

There is further provided for the redox potential of the leach vessel to be raised by increasing the volumetric supply rate of ferric iron from the Ferric Iron Generator to the leach vessel.

There is also provided for the redox potential to be raised by increasing the ferric-iron to ferrous-iron ratio in the Ferric Iron Generator by supplying more oxygen to the Ferric Iron Generator.

There is also provided for operating conditions inside the Ferric Iron Generator to be maintained such that iron hydrolysis occurs inside the Ferric Iron Generator.

There is also provided for iron precipitation to occur inside the Ferric Iron Generator to the extent that the total dissolved iron concentration of the solution exiting the Ferric Iron Generator is at least 1 g/l less than that of the solution entering the Ferric Iron Generator.

There is further provided for the Ferric Iron Generator to be operated with a pH value of between about 1.3 and about 1.7, alternatively a free sulphuric acid concentration of between 2 g/l and 5 g/l.

There is also provided for the process to be operated with the ferric iron concentration in the Ferric Iron Generator product liquor that is fed to the leach step to be between about 5g/l and about 30g/l.

There is still further provided for the metal winning step to include treatment of the leach product stream in an electrowinning plant, alternatively in a combined solvent extraction and electrowinning plant.

There is also provided for the leach product stream to be treated in a solid-liquid separator to produce a liquid product, for the liquid product to be treated in the metal winning step, and for the solid-liquid separator to include a thickener, filtration plant, centrifuge or cyclone.

There is also provided for the material to include metal in one or more of a sulphide, metallic and other bonded form.

A further feature of the invention provides for the process to be self-regulatory due to the production of acid resulting from the hydrolysis of ferric iron to aqueous ferric hydroxide (which may but need not be accompanied by complete or partial precipitation of the ferric hydroxide), that occurs when the amount of ferrous iron that has been oxidised to ferric iron rises above a saturated ferric iron concentration that can be supported at the prevailing free acid concentration, and the increased free acid concentration resulting from the ferric iron hydrolysis causes an increase in the solubility of ferric iron which results in a lower rate of ferric iron hydrolysis, thereby causing the system to automatically reach equilibrium ferric iron and acid concentrations.

### BRIEF DESCRIPTION OF THE DRAWINGS

An embodiment of the invention will be described below by way of example only and with reference to the accompanying drawings in which:
- Figure 1: is a flow diagram of a leach process with separated leach and iron oxidation steps;
- Figure 2: is a flow diagram showing mass stoichiometry; and
- Figure 3: is a graph showing the iron-acid equilibrium in a Ferric Iron Generator (FIG) upon complete oxidation of Fe²⁺-iron to Fe³⁺-iron

### DETAILED DESCRIPTION OF THE DRAWINGS

### 1. Introduction

The explanation of the reasoning regarding the underlying chemistry is first discussed in idealised terms, using only selected copper sulphide minerals to demonstrate the concept. In a following separate sub-section, a brief overview will be given as to how the practical situation may deviate from this idealised situation. Nevertheless, the application of the concepts need not be limited to copper sulphide minerals, and the deviations from ideality that may occur in practise do not detract from the validity of the proposed approach as a means of optimising the process. Furthermore, some modifications that could be applied without deviating from the principles proposed here are discussed.

### 2. The Idealised Chemistry, Using Selected Copper Sulphide Minerals as an Example.

### a. The Energy Benefit of Using a Ferric Iron Generator (FIG)-Based Process

It has been mentioned that the separation of the iron oxidation step and the leach step facilitate separate optimisation of the two processes.

A second benefit is the control that can be had over the sulphur oxidation reaction, which would lead to energy savings. To illustrate this, the sequence of reactions involved in the oxidation of chalcopyrite is shown as an example. The first step is the use of oxygen to oxidise ferrous iron to ferric iron, according to reaction [1] below.

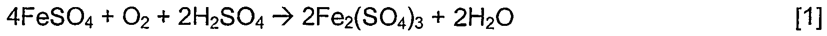

This is the reaction that would occur in a FIG. If the process is not based on a FIG, then reaction [1] would occur in the leach vessel.

It is generally accepted that ferric attack of the copper sulphide yields the copper and iron in soluble form, with the sulphur reporting essentially elemental sulphur, as shown in equation [2].

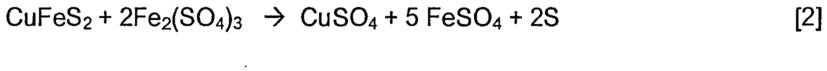

Reaction [2] occurs in the leach reactor.

The net result for the entire leaching process, being the sum of reactions [1] and [2], would be equation [3], namely: 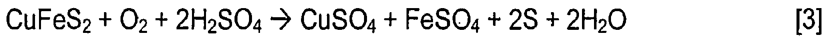 (Note that, although the active oxidation reagent in the leach step is ferric-sulphate, as shown in equation [2], the net result for the over-all process (equation [3]) reflects oxygen as the ultimate oxidising agent).

A further reaction is possible if the oxygen is added to the same vessel in which leaching occurs, as it occurs in a conventional bioleach reactor, namely oxidation of the elemental sulphur to form sulphuric acid, according to equation [4].

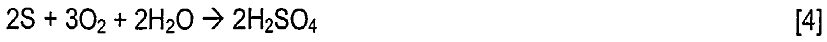

Adding reaction [4] to reaction [3], the net reaction in such a reactor would be as shown in reaction [5], namely:

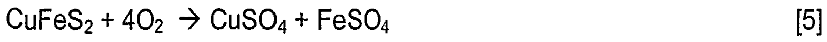

Note that, in reaction [5], the amount of oxygen required to effect the solubilisation of the copper from the chalcopyrite is four times as much oxygen as is the case in reaction [3]. In an oxidative leach process, the energy requirement for the transfer of the oxygen is a major cost element. Therefore, by avoiding the oxidation of elemental sulphur to sulphate, which equals acid (reaction [4]), the oxidation energy requirement can be reduced significantly.

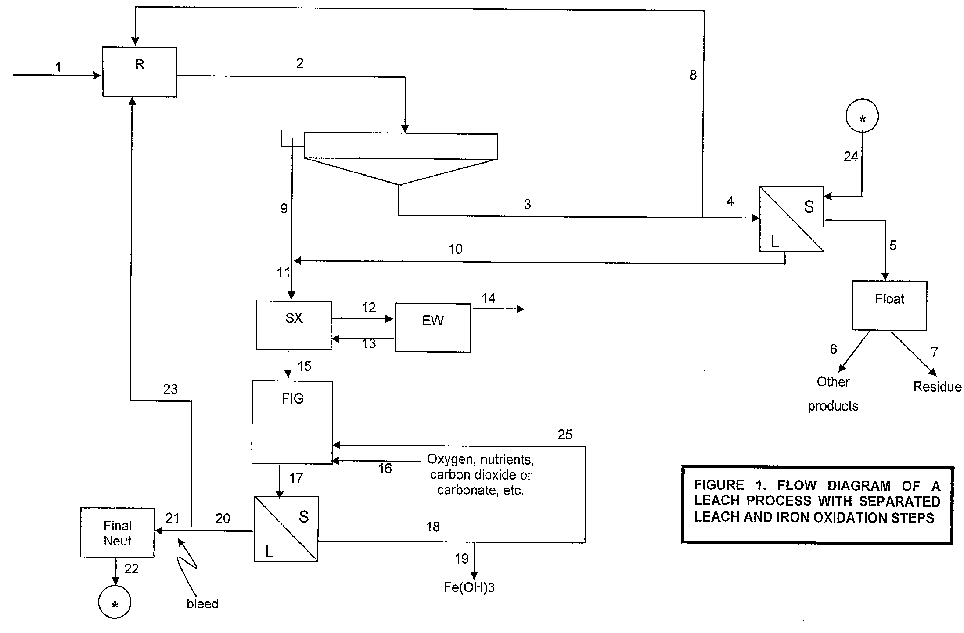

When using a separate FIG for oxidising the ferrous iron to ferric (reaction [1]), the elemental sulphur formed in the leach reactor (according to equation [2]) is not brought in contact with the oxygen because elemental sulphur, being a solid, would follow stream (3) in Figure 1, not stream (9), and is therefore not oxidised according to reaction [4]. The elemental sulphur would come in contact with ferric iron in the leach reactor, but ferric iron is not a sufficiently strong oxidising agent to oxidise the elemental sulphur to acid, as is possible with oxygen according to reaction [4].

Therefore, with the use of FIG-based system, the over-all leach reaction would essentially be according to reaction [3], not reaction [5], yielding the concomitant saving in oxygen transfer energy cost.

### b. The Acid Balance Benefit of Using a Ferric Iron Generator(FIG)

Apart from the reactions discussed above, other reactions that need to occur in the over-all process are:

Oxidation of the net iron produced during the process. The net iron production is the iron produced over and above the iron oxidised in equation [1] which is required to sustain the leaching of equation [2]. The net iron produced is therefore the ferrous-sulphate produced in equation [3] and this is oxidised to ferric iron according to equation [6] to make it amenable to precipitation for removal from the process:

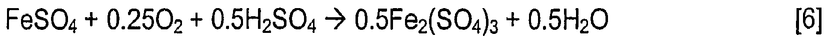

The removal of the oxidised net ferric iron is done by way of hydrolysis and precipitation of the ferric iron as ferric hydroxide (or as haematite, jarosite, goethite or any other hydrolysed or precipitated form of iron which yields acid in its formation from ferric sulphate) for disposal, according to equation [7a] and [7b]:

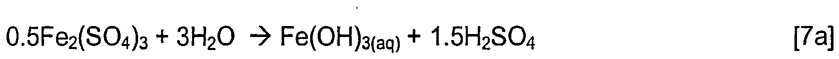

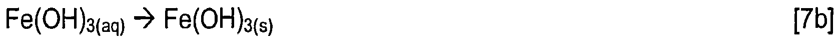

Equation [7a] shows the hydrolysis of ferric iron to ferric hydroxide in solution and equation [7b] shows the precipitation of aqueous ferric hydroxide from solution as a solid. Reactions [7a] and [7b] may either both occur in the FIG, or may occur in separate vessels, with for example equation [7a] occurring in the FIG and equation [7b] occurring in the leach reactor, depending on such factors as the availability of seeding surface area, pH, and temperature in the FIG and leach reactor respectively. In order to satisfy the acid balance in the FIG in accordance with this invention, it is required that at least reaction [7a] occurs in the FIG. Whether reaction [7b] occurs in the FIG or in the reactor has no acid balance implications, but data obtained during experimentation with the concept has shown that at least a portion of the aqueous ferric hydroxide precipitates in the FIG, unless uneconomic quantities of acid is added to the FIG in an effort to prevent the precipitation. In equation [7] above, the iron has for simplicity and clarity sake been shown to precipitate as ferric hydroxide. In reality, the iron can precipitate in a number of different oxy-hydroxide or jarosite forms, for which the principle remains the same, in that the number of moles of acid produced is the same as the number of moles of iron that is hydrolised.

Winning of the copper in metal form which, whether it occurs by means of a combination of solvent extraction and electrowinning or by means of electrowinning only, can be described by equation [8]:

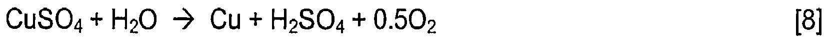

In the case of a FIG-based process, the net reaction for the over-all process would be the sum of equations [3], [6], [7] and [8], to yield equation [9], namely:

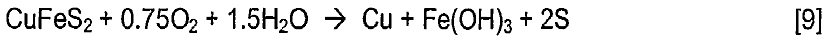

In the case of a process in which the oxygen is added directly to the leach reactor, so that the sulphur gets oxidised to acid, the net reaction for the over-all process would be the sum of equations [5], [6], [7] and [8], to yield equation [10], namely:

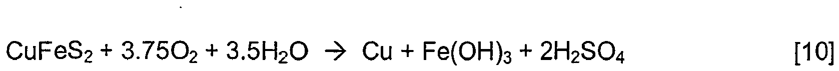

It can be seen that, in the case of the FIG-based process, the over-all process (equation [9]) involves neither acid addition nor acid production. However, in the case where the oxygen is added directly to the leach reactor, the net process reaction (equation [10]) involves the production of 2 moles of sulphuric acid for every mole of copper metal produced, representing a mass ratio of about 3 kilogram of sulphuric acid produced for every kilogram of copper metal produced. That would require roughly the same ratio of mass of limestone required for acid neutralisation per kilogram of copper produced. Not surprisingly, the cost of limestone for neutralisation is another key cost element of a sulphide mineral leach process where the sulphide is oxidised completely to sulphate, as opposed to reporting as elemental sulphur.

However, this benefit of a FIG-based process can only be realised in a suitable plant arrangement. For example, if iron precipitation could not be permitted in the FIG, then acid would need to be added to the FIG to satisfy the acid demand of reaction [1], because ferric iron will not remain solubilised in liquor with insufficient acid content. Furthermore, if the metals winning step (reaction [8]) does not precede the FIG, the acid produced by reaction [8] would also not be available in the FIG to support the acid demand of reaction [1], and the requirement for acid addition to the FIG would be even higher. Of course, such acid would be added to a net acid neutral process, and would have to be neutralised again elsewhere in the process with neutralisation agent such as limestone, which adds a double cost (of both acid and neutralisation agent) to the cost of the process.

However, if the configuration of the FIG is such as to tolerate iron precipitation in the FIG, and furthermore the metals winning step precedes the FIG so that the acid produced in the metals winning step is carried towards the FIG, the net result of reactions occurring over the combination of copper winning and FIG would be represented by the sum of reactions [1], [6], [7] and [8], to yield reaction [11]:

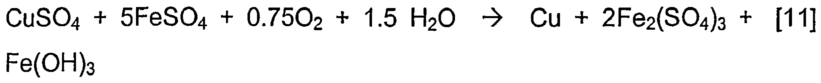

This combination can be seen to once again be acid neutral, involving no consumption or production of acid.

From reaction [2], it can be seen that the leach reaction occurring in the leach vessel is also acid neutral, requiring no acid addition or neutralisation in the leach step either.

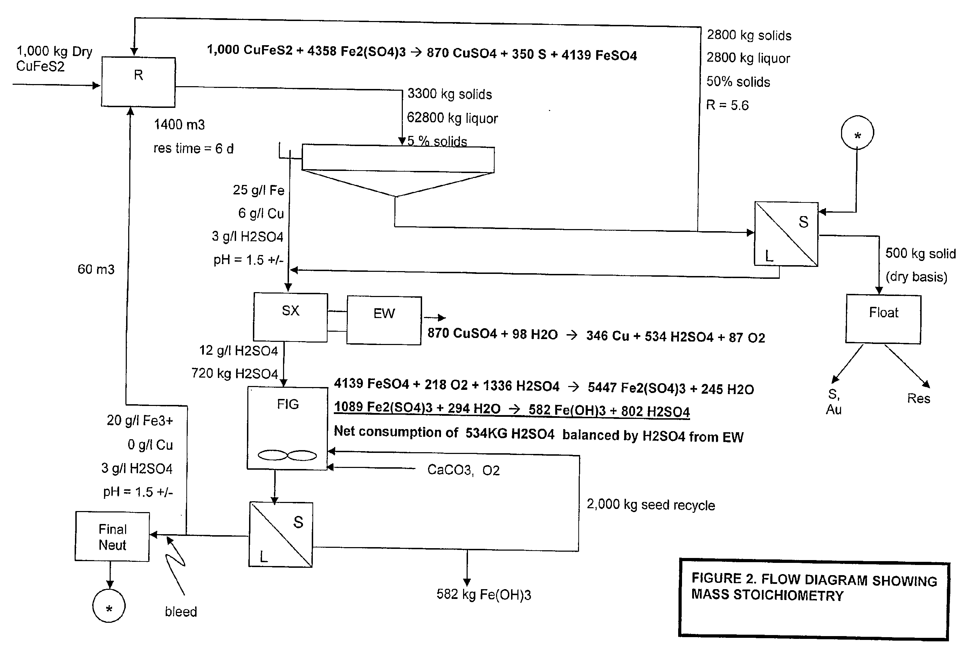

To further illustrate the above principles, the diagram of the process is repeated in Figure 2, showing the chemical reaction stoichiometry in units of mass, not in molar units as has been done for equations [1] to [11] above. Therefore, it will be found that the stoichiometric numbers appearing in the equations in Figure 2 cannot be used to calculate balances of individual atoms between the left- and right-hand sides of the equations. Rather, because it is mass-based, balances need to be calculated by summation of all coefficients on the left-hand side of an equation for comparison with the summation of all coefficients on the right-hand side of an equation. The basis used in Figure 2 is treatment of 1,000 kg CuFeS₂.

### c. Self-Regulatory Benefit of Using a FIG

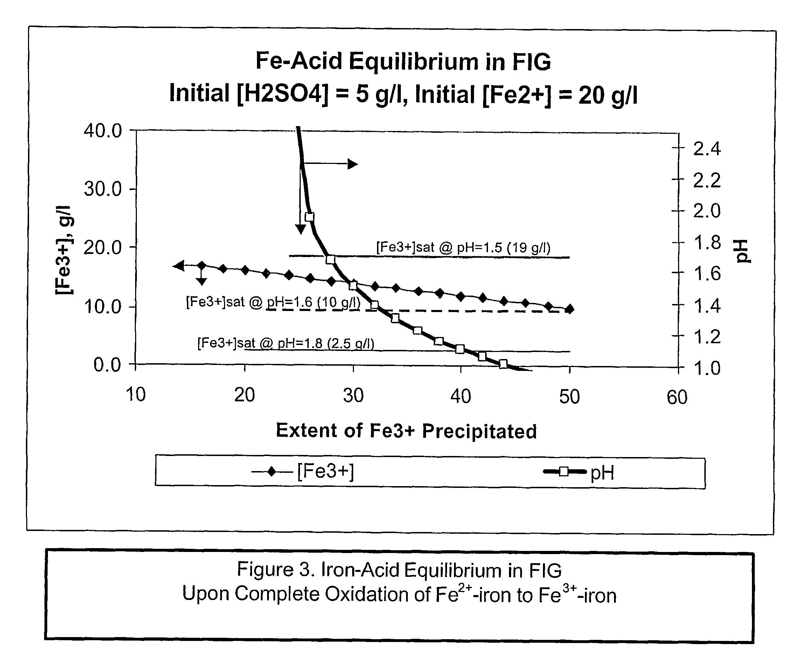

The self-regulatory nature of the process can be explained at the hand of Figure 3. An example was chosen of liquor entering a FIG, containing 5 g/l free sulphuric acid (which acid concentration would result for example after the winning by solvent extraction of 3 g/l copper from liquor initially containing 0.5 g/l free sulphuric acid). For the sake of the illustration, the liquor is assumed to contain 20 g/l of ferrous iron and 0 g/l ferric iron when it enters the FIG. In Figure 3, the final ferric iron concentration and pH, resulting from various extents of iron precipitation after complete oxidation of all ferrous iron to ferric iron, are shown on the left- and right-hand y-axes respectively. Furthermore, the three horizontal "saturation" lines indicate the saturated ferric iron concentrations that can typically be found in bioleach reactors at pH values of 1.8, 1.6 and 1.5 respectively.

From the stoichiometry of equation [6], it can be calculated that the complete oxidation of all the ferrous iron to ferric iron would consume 17.5 g/l acid, which is much more than the free acid available in the liquor entering the FIG. Because the solubility of ferric iron diminishes with decreasing acidity (increasing pH), ferric iron will start to hydrolise (and assumed in this case to precipitate at the same time) from solution when such an amount of ferrous iron has been oxidised to ferric iron that the ferric iron concentration rises above the saturated ferric iron concentration that can be supported at the prevailing free acid concentration. However, as discussed above, the precipitation of ferric iron yields acid, and from the stoichiometry of equation [7], it can be calculated that the complete precipitation of all the iron would yield 52.5 g/l acid, which is much more than the requirement of 17.5 g/l by the oxidation reaction. Therefore, clearly less than 100% of the iron would be precipitated by the acid consumption of the iron oxidation reaction. But the acid produced by iron precipitation will serve to counter the acid consumption of the iron oxidation reaction, and herein lies the self-regulatory nature of a FIG in which both iron oxidation and iron precipitation are permitted.

In particular for the example shown in Figure 3, it can be seen that, should 30% of the iron precipitate after complete oxidation to ferric iron, it would result in a final ferric iron concentration of 14 g/l, and a final pH of 1.5. However, it can be seen from the upper saturation line that, at a pH of 1.5, a ferric iron concentration of 19 g/l can be supported. From this it can be deduced that less than 30% of the iron would precipitate, because iron would not continue to precipitate below its saturation point. Should 29% of the iron be precipitated, it would yield a final iron concentration of little over 14 g/l, and a final pH of 1.6. However, from the middle saturation line, it can be seen that, at pH of 1.6, only 10 g/l ferric iron can be supported. Therefore, it can be deduced that more than 29% of the iron will precipitate in order to arrive at a iron-acid equilibrium. The extent of iron precipitation that will occur in the FIG has therefore been determined within 1% as being between 29 and 30%, and the final pH will be between 1.5 and 1.6. In being oxidised from ferrous iron (Fe²⁺) to ferric iron (Fe³⁺), the total iron concentration will have dropped from 20 g/l to 14 g/l due to precipitation. Because the over-all FIG based process as proposed here (with the effective acid production of the metals winning and iron precipitation steps being made available in the FIG), is acid neutral as represented by equation [9], it means that, as long as no acid or neutralisation agents are added to the process, the total iron content and acid concentration in the process would stabilise under steady state conditions by the self-regulatory acid- and iron-balance discussed above. Note from a comparison of the amount of iron entering the process as chalcopyrite in equation [1], (one mole of iron per mole of chalcopyrite), and the amount of iron precipitated according to equation [9], (also one mole of iron precipitated as ferric hydroxide per mole of chalcopyrite), that only so much iron as enters with the feed chalcopyrite is precipitated as ferric hydroxide. Namely one mole of iron precipitates as ferric hydroxide for every one mole of iron entering the process as chalcopyrite, to yield the over-all acid-neutral process represented by equation [9].

The method proposed here, namely to permit a certain extent of iron hydrolysis in the FIG to provide an iron-acid balance in the FIG, is in direct contrast to such process claims as those by Nesbitt and Lueking⁽⁷⁾, in which an express claim is the use of acid addition and/or neutralisation for the purpose of pH control in a FIG. Their method relies on active intervention to maintain the pH within a certain range, opposed to the method proposed here of setting up the flows between the unit operations in such a way that the process could be permitted to establish and regulate a natural acid-iron balance.

### d. Practical Working Conditions

It would in principle be possible to operate the process proposed here under a number of different combinations of process parameters. An important parameter would be the working pH values in the leach reactor and FIG, coupled to which is the acid inventory in the process. Because the over-all process is acid neutral, the acid inventory, and hence the acid concentration and acid inventory in any given unit operation would remain constant over time after an initial acid inventory had been established and after steady state operating conditions have been achieved. The larger the initial acid inventory is made, the higher the acidities (and the lower the pH values) would be in each of the unit operations, which if of particular importance in the FIG. The higher the acidity, the higher the saturated ferric iron concentration that could be supported, and hence the smaller stream 9 in Figure 1 needs to be, which results in a smaller pumping requirement of stream 2, and smaller solid-liquid separation requirement for stream 2.

An acid concentration in the FIG under steady state conditions, (i.e. including the acid-balance effects of ferrous iron oxidation and ferric iron precipitation), of lower than 2 g/l, being equivalent to a pH of 1.7, would not lend itself to economic processing of concentrates, because due to the low saturated ferric content (about 5 g/l) that can be supported at such a high pH, the need for decantation of liquor from the leach vessel product to provide a large enough volumetric flow of ferric-bearing liquor from the FIG to the leach reactor would be excessive.

An acid concentration in the FIG of higher than 5 g/I acid, being equivalent to a pH of 1.3, would lead to excessively high ferric iron concentrations, and both the high iron content and the low pH may interfere with the metals winning step and with the viability of the bacteria in the case where bacterially assisted oxidation is used in the FIG.

It is therefore concluded that the most important practical working conditions to be considered for the application of the process as proposed here to the leaching of mineral concentrates, would be a pH in the FIG of between 1.3 and 1.7, or a free sulphuric acid concentration of between 2 and 5 g/l. The corresponding optimal ferric iron concentration prevailing in the FIG product liquor that is recycled to the leach step would be between 5 g/l and 30 g/l.

### e. Generalisation

The process as envisaged in Figure 1 shows only one leach vessel, and one thickener to decant liquor from stream 2. However, in practice, the process would probably consist of a number of reactors, arranged in any of a number of possible series-parallel arrangements, from which decanted liquor is sent to one or a number of FIG's, with liquor from the FIG's in turn being split up for recirculation to any number of the leach vessels. However, the principles applied and the benefits sought would remain the same as those discussed here.

The principles discussed above regarding the energy savings with the use of a FIG, and the minimisation of acid production or acid consumption with the appropriate FIG-configuration and arrangement of FIG and metals winning step apply equally to other copper minerals, and can be applied to sulphide minerals other than copper.

In the case of minerals that do not contain iron, reactions [6] and [7] would not be applicable, and the iron required in reactions [1] and [2] would need to be added to the process or need to be derived from other iron-bearing compounds in the feed material. If no iron enters the system with the feed of stream (1) in Figure 1, no iron precipitation would be required in the FIG, and the initially established soluble iron inventory would simply be recycled in the process between the leach reactor and the FIG, with additions only required to make up for losses of iron from the process in the bleed stream and in residual moisture of the leach residue. In such a case, the corresponding equations would be as follows for the example of covelite, which contains no iron:

| | | |
|---|---|---|
| Oxidation of circulating iron load in the FIG | 2FeSO₄ + 0.5O₂ + H₂SO₄ → Fe₂(SO₄)₃ + H₂O | [12] |
| Leaching of the mineral by ferric sulphate | CuS + Fe₂(SO₄)₃ → CuSO₄ + 2FeSO₄ + S | [13] |
| Winning of copper | CuSO₄ + H₂O → Cu + H₂SO₄ + 0.5O₂ | [14] |
| Net | CuS → Cu + S | [15] |

Once again, the over-all reaction for the process (equation [15]) is acid neutral, requiring no addition or neutralisation of acid, provided that the acid being generated during copper winning (reaction [14]) is made available for consumption by the iron oxidation reaction in the FIG (reaction [12]). Because the feed mineral (CuS) bears no iron (Fe), there is no net production of iron, no precipitation of any iron product is required to prevent iron build-up, and a constant inventory of iron will simply be recirculated indefinitely between the FIG and the leach vessel.

Another slight variation that may be applied to the above principles would be to, instead of placing unit operations fully in series with one another, use partial bypassing of streams between unit operations, which could be done for any number of processing reasons. For example, instead of the entire stream 11 (Figure 1) being directed towards SX, only a portion of it could pass through SX, with another portion passing directly to the FIG. As long as at least part of the product from SX (stream 15) is directed towards the FIG, all or at least part of the acid produced in SX would be made available in the FIG, which is the intention of this patent. This particular example may be employed for the leaching of zinc-bearing sulphides, where iron needs to be removed from the zinc-SX- or zinc-SXEW feed. A strategy for employing the principles of this patent, while still satisfying the processing need of iron removal from the SX/SXEW feed, would be to split stream 11 between the FIG and SX/SXEW. The circuit's dissolved zinc content would be controlled by controlling the proportion of stream 11 that is directed towards SX/SXEW, whereas at least a minimum proportion of the flow would need to by-pass directly to the FIG to maintain sufficient ferric iron in solution to support the leach reaction. Any number of such variations could be applied to any one of the streams shown in Figure 1, without deviating from the basic principles of this patent.

Another variation which would still be within the intentions of this patent would be where, opposed to precipitation of iron in the FIG according to equation [7] above, the iron hydrolises (i.e. reacts with water), to effectively yield acid, but without precipitating, i.e. the iron remains in solution as hydrolised ferric-hydroxide or equivalent compound. The iron may only precipitate upon seeding in another vessel following the FIG, or all of it may remain in solution to be returned to the leach reactor. The important principle is that it would be able to write the reaction of ferric iron in the FIG in such a way that it can be shown to effectively yield acid, that would be available to fulfil or partly fulfil the acid demand of the iron oxidation reaction (equation [1]) in the FIG. Therefore, one could equally well read "reaction of ferric iron with water to effectively yield acid" for "precipitation of ferric iron" above.

### f. Deviation from Idealisation

The equations presented above are idealised, because in practise factors like the following might alter detail aspects of the scenario:
- Depending on the detailed mechanism of the leach reaction [2], even without direct contact with oxygen, some of the sulphur produced may report in the form of sulphate, opposed to elemental sulphur. Typical published figures range between 0 and 30%⁽⁶⁾.
- Apart from the mineral bearing the valuable metal sulphide, other minerals and acid consuming gangue will normally co-occur, which will alter the over-all acid balance. Similarly, minerals that yield acid under ferric-leaching, such as pyrite, may be present in the feed material.
- If oxidation in the FIG is bacterially assisted, it may be chosen to supply carbon dioxide to the FIG in the form of carbonate mineral, which will at the same time neutralise some acid and hence alter the over-all acid balance.

These effects could make it necessary for acid and neutralisation agent to be added in certain parts of the circuit. Nevertheless, the expenses on such acid and neutralisation agent additions and on energy for oxygen supply that would be made necessary by the above deviations from idealisation will still be smaller than:
- The acid addition that will be required to be made to a FIG (and the neutralisation agent that would be required elsewhere in the circuit for the neutralisation of the acid that had been added to the essentially acid-neutral process), in the case where the ferric iron is not permitted to hydrolise to effectively yield acid in the FIG,
- The additional acid that would need to be supplied in a case where the metal winning step does not precede the FIG so that net acid transfer to the FIG-feed liquor from the metals winning step is not made available to the reactions in the FIG.
- The neutralisation agent additions that will be required for neutralisation in the case of a leach in which the sulphur is essentially (>30%) converted to sulphate,
- The energy that will be required for oxygen supply in the case of a leach in which the sulphur is essentially (>30%) converted to sulphate.

It will be understood that this is only one embodiment of the invention. It is possible to alter some aspects of the embodiment without departing from the scope of the invention.

### REFERENCES

1. US 5,462,720; Aragones; "Process for Biolixiviating Copper Sulfides by Indirect Contact with Separation of Effects".
2. WO 98/51828; Sharp, Stuffle, Karlage, and Young; "Sulfide Mineral Concentrate Bioleaching".
3. The Mintek/BacTech Copper Bioleach Process, by PJ van Staden; ALTA Conference, 1998.
4. ZA 97/1307, Pinches, Myburgh, van der Merwe; "A Process for the leaching of chalcopyrite".
5. Mintek Patent JFF/4 499. A method for the control of redox potential in bioleach processes.
6. Dutrizac J.E., MacDonald R.J.C. Ferric Ion as a Leaching Medium. Minerals Sci. Engng., vol 6, no. 2. April 1974.
7. EP 0 808 910 A3; Lueking, Nesbitt; "Apparatus and method for the generation and use of ferric ions produced by bacteria"
8. US 5,827,701; Lueking, Nesbitt; "Method for the generation and use of ferric ions".
9. US 6,043,022; Lueking, Nesbitt; "Apparatus and method for the generation and use of ferric ions".

## Claims

1. A process for the indirect oxidative leaching of copper from a feed material which contains copper in sulphide form, which includes at least one acid producing step and at least one acid consuming step which occur in at least two physically separated vessels; the process including in sequence, the steps of:
a) oxidising the copper sulphide material with ferric iron to transfer oxidative power to the copper sulphide material to leach the copper therefrom and to reduce the ferric iron to ferrous iron, with the ferrous iron and the leached copper being contained in a leach product stream;
b) an acid producing step which comprises recovering copper from the leach product stream by removing at least part of the leached copper with a solvent extraction step and forming an acid in the solvent extraction product stream;
c) an acid consuming step in a vessel physically separate from the vessels in which reactions (a) and (b) occur, and which utilises acid from step b) to oxidise the ferrous iron to ferric iron in a Ferric Iron Generator and providing the ferric iron to step a) again;
wherein the process further includes the hydrolysis of iron to yield aqueous ferric hydroxide or an aqueous precursor of any possible iron oxy-hydroxide or jarosite, according to the following chemical reaction: 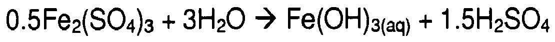 in which Fe₂(SO₄)₃ is ferric sulphate; H₂O is water; Fe(OH)_{3(aq)} is the ferric hydroxide in solution; H₂SO₄ is sulphuric acid, and the ratio of moles of acid formed per moles of iron hydrolysed is the same for the formation of any of the iron oxy-hydroxides or jarosites;
and the removal of excess iron from the process by means of precipitation of the aqueous ferric hydroxide, or the aqueous precursor of any possible iron oxy-hydroxide or jarosite, according to the following general chemical reaction which can occur either completely or partly in the Ferric Iron Generator, or completely in any another part of the process: 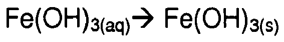 in which Fe(OH)_{3(aq)} is the ferric hydroxide in solution; and Fe(OH)₃₍ₛ₎ is the precipitated ferric hydroxide.

2. A process as claimed in claim 1 in which the Ferric Iron Generator utilises bacterially assisted oxidation of ferrous iron to ferric iron, or pressure oxidation of ferrous iron to ferric iron.

3. A process as claimed in claim 2 in which the ferric iron is utilised in the form of ferric sulphate, ferric chloride, or ferric nitrate.

4. A process as claimed in any one of claims 1 to 3 in which step a) comprises the following general chemical reaction: 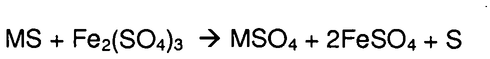 in which MS is a copper sulphide, Fe₂(SO₄)₃ is ferric sulphate; MSO₄ is copper sulphate in solution, FeSO₄ is ferrous sulphate and S is elemental Sulphur;
in which the acid producing step b) comprises the following general chemical reaction: 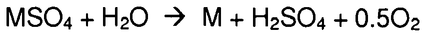 in which MSO₄ is copper sulphide in solution; H₂O is water; M is the recovered copper; H₂SO₄ is sulphuric acid; and O₂ is oxygen;
in which the acid consuming step c) comprises the following general chemical reaction: 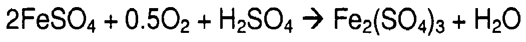 in which FeSO₄ is ferrous sulphate; O₂ is oxygen; H₂SO₄ is sulphuric acid; Fe₂(SO₄)₃ is ferric sulphate; and H₂O is water.

5. A process as claimed in any one of claims 1 to 4 in which the Ferric Iron Generator includes a fluidised particle bed or mechanically stirred particle bed containing mineral oxidising bacteria, and in which some of the bacteria are attached to the particles of the particle bed and some of the bacteria occur freely in solution.

6. A process as claimed in claim 1 to 4 in which the Ferric Iron Generator comprises a pressure leach or high temperature leach reactor to effect the oxidation of ferrous to ferric iron.

7. A process as claimed in claim 1 to 4 in which the Ferric Iron Generator comprises a mineral dump, heap of ore, or other suitable material, which could be discarded and replaced when it becomes saturated with precipitated iron.

8. A process as claimed in any one of claims 1 to 7 in which the redox potential of the leach vessel is controlled by means of the rate of ferric iron supply to the leach vessel, and the rate of ferric iron supply is controlled by means of control over the ferric-iron to ferrous-iron ratio maintained in the Ferric Iron Generator and supplied to the leach vessel.

9. A process as claimed in any one of claims 1 to 7 in which redox potential of the leach vessel is controlled by means of the rate of ferric iron supply to the leach vessel, and the rate of ferric iron supply is controlled by controlling the volumetric supply rate of ferric iron to the leach vessel.

10. A process as claimed in claim 6 or 7 in which the redox potential of the leach vessel is raised by increasing the volumetric supply rate of ferric iron from the Ferric Iron Generator to the leach vessel.

11. A process as claimed in claims 6 to 9 in which the redox potential is raised by increasing the ferric-iron to ferrous-iron ratio in the Ferric Iron Generator by supplying more oxygen to the Ferric Iron Generator.

12. A process as claimed in claims 1 to 10 in which the operating conditions in the Ferric Iron Generator are maintained such that iron hydrolysis occurs inside the Ferric Iron Generator.

13. A process as claimed in claims 1 to 11 which includes precipitation of the aqueous ferric hydroxide to the extent that the total dissolved iron concentration of the solution exiting the Ferric Iron Generator is at least 1 g/l less than that of the solution entering the Ferric Iron Generator.

14. A process as claimed in any one of claims 1 to 10 in which the Ferric Iron Generator to be operated with a pH value of between about 1.3 and about 1.7.

15. A process as claimed in any one of claims 1 to 12 in which the Ferric Iron Generator to be operated with a free sulphuric acid concentration of between 2 g/l and 5 g/l.

16. A process as claimed in claim 11 or 12 which is operated with the ferric iron concentration in the Ferric Iron Generator product liquor that is fed to the leach step to be between about 5g/l and about 30g/l.

17. A process as claimed in any one of claims 1 to 13 in which the acid producing step b) includes treatment of the leach product stream in an electrowinning plant.

18. A process as claimed in any one of claims 1 to 15 in which the leach product stream is treated in a solid-liquid separator to produce a liquid product, the liquid product is treated in the metal winning step, and the solid-liquid separator includes a thickener, filtration plant, centrifuge or cyclone.

19. A process as claimed in claim 18 in which at least part of the liquid product from the additional solid-liquid separator is treated in the acid producing step b).

20. A process as claimed in any one of claims 1 to 19 in which the material include metal in one or more of a sulphide, metallic and other bonded form.

## Patentansprüche

1. Verfahren zum indirekten oxidierenden Auslaugen von Kupfer aus einem Beschickungsmaterial, welches Kupfer in Sulfidform enthält, das zumindest einen Säureherstellungsschritt und zumindest einen Säureverbrauchsschritt einschließt, die in zumindest zwei physisch getrennten Gefäßen auftreten; wobei das Verfahren der Reihe nach die folgenden Schritte beinhaltet:
a) Oxidieren des Kupfersulfidmaterials mit dreiwertigem Eisen zum Übertragen oxidierender Leistung auf das Kupfersulfidmaterial, um das Kupfer aus diesem auszulaugen und das dreiwertige Eisen zu zweiwertigem Eisen zu reduzieren, wobei das zweiwertige Eisen und das ausgelaugte Kupfer in einem Auslaugungsproduktstrom enthalten sind;
b) einen Säureherstellungsschritt, der die Wiedergewinnung von Kupfer aus dem Auslaugungsproduktstrom durch Entfernen zumindest eines Teils des ausgelaugten Kupfers mit einem Lösungsmittelextraktionsschritt und Bilden einer Säure in dem Lösungsmittelextraktionsproduktstrom umfasst;
c) einen Säureverbrauchsschritt in einem Gefäß, das von den Gefäßen, in denen die Reaktionen (a) und (b) ablaufen, physisch getrennt ist und das Säure aus dem Schritt b) verwendet, um das zweiwertige Eisen zu dreiwertigem Eisen in einem Eisen(III)-Generator zu oxidieren und das dreiwertige Eisen wieder dem Schritt a) zuzuführen;
wobei das Verfahren weiterhin die Hydrolyse von Eisen einschließt, um wässriges dreiwertiges Hydroxid oder einen wässrigen Vorläufer eines beliebigen möglichen Eisenoxyhydroxids oder Jarosits gemäß der folgenden chemischen Reaktion zu ergeben: 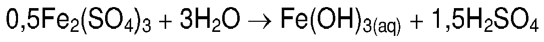 worin Fe₂(SO₄)₃ für Eisen(III)-Sulfat steht; H₂O für Wasser steht; Fe(OH)_{3(aq)} für das dreiwertige Hydroxid in Lösung steht; H₂SO₄ für Schwefelsäure steht und das Verhältnis gebildeter Säuremole zu Molen von hydrolysiertem Eisen das gleiche für die Bildung eines beliebigen der Eisenoxyhydroxide oder Jarosite ist;
und die Entfernung von überschüssigem Eisen aus dem Verfahren mittels Ausfällen des wässrigen dreiwertigen Hydroxids oder des wässrigen Vorläufers eines beliebigen möglichen Eisenoxyhydroxids oder Jarosits gemäß der folgenden allgemeinen chemischen Reaktion einschließt, die entweder ganz oder teilweise in dem Eisen(III)-Generator oder ganz in irgendeinem anderen Teil des Verfahrens ablaufen kann: 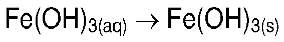 worin Fe(OH)_{3(aq)} für das dreiwertige Hydroxid in Lösung steht; und Fe(OH)₃₍ₛ₎ für das ausgefällte dreiwertige Hydroxid steht.

2. Verfahren nach Anspruch 1, wobei der Eisen(III)-Generator eine bakteriell unterstützte Oxidierung von zweiwertigem Eisen in dreiwertiges Eisen oder eine Druckoxidierung von zweiwertigem Eisen in dreiwertiges Eisen verwendet.

3. Verfahren nach Anspruch 2, wobei das dreiwertige Eisen in Form von Eisen(III)-sulfat, Eisenchlorid oder Eisennitrat verwendet wird.

4. Verfahren nach irgendeinem der Ansprüche 1 bis 3, wobei Schritt a) die folgende allgemeine chemische Reaktion umfasst: 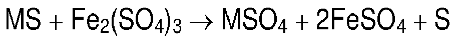 worin MS für ein Kupfersulfid steht, Fe₂(SO₄)₃ für Eisen(III)-sulfat steht; MSO₄ für Kupfersulfat in Lösung steht, FeSO₄ für Eisen(II)-sulfat steht und S für elementaren Schwefel steht;
wobei der Säureherstellungsschritt b) die folgende allgemeine chemische Reaktion umfasst: 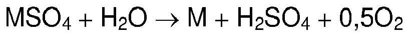 worin MSO₄ für Kupfersulfid in Lösung steht; H₂O für Wasser steht; M für das wiedergewonnene Kupfer steht; H₂SO₄ für Schwefelsäure steht; und O₂ für Sauerstoff steht;
wobei der Säureverbrauchsschritt c) die folgende allgemeine chemische Reaktion umfasst: 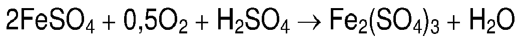 worin FeSO₄ für Eisen(II)-sulfat steht; O₂ für Sauerstoff steht; H₂SO₄ für Schwefelsäure steht; Fe₂(SO₄)₃ für Eisen(III)-sulfat steht; und H₂O für Wasser steht.

5. Verfahren nach irgendeinem der Ansprüche 1 bis 4, wobei der Eisen(III)-Generator eine aufgewirbelte Partikelschüttung oder mechanisch gerührte Partikelschüttung einschließt, die mineraloxidierende Bakterien enthält, und wobei einige der Bakterien an den Partikeln der Partikelschüttung haften und einige der Bakterien frei in der Lösung vorkommen.

6. Verfahren nach Anspruch 1 bis 4, wobei der Eisen(III)-Generator einen Druckauslaugungs- oder Hochtemperaturauslaugungsreaktor umfasst, um die Oxidierung von zweiwertigem in dreiwertiges Eisen zu bewirken.

7. Verfahren nach Anspruch 1 bis 4, wobei der Eisen(III)-Generator eine Mineraldeponierung, einen Erzhaufen oder anderes geeignetes Material umfasst, das verworfen und ersetzt werden könnte, wenn es mit ausgefälltem Eisen gesättigt ist.

8. Verfahren nach irgendeinem der Ansprüche 1 bis 7, wobei das Redoxpotenzial des Auslaugungsgefäßes mittels der Zuführungsrate von dreiwertigem Eisen zum Auslaugungsgefäß gesteuert wird und die Zuführungsrate von dreiwertigem Eisen mittels einer Steuerung über das Dreiwertiges-Eisen-in-Zweiwertiges-Eisen-Verhältnis gesteuert wird, das im Eisen(III)-Generator aufrechterhalten und dem Auslaugungsgefäß zugeführt wird.

9. Verfahren nach irgendeinem der Ansprüche 1 bis 7, wobei das Redoxpotenzial des Auslaugungsgefäßes mittels der Zuführungsrate von dreiwertigem Eisen zum Auslaugungsgefäß gesteuert wird und die Zuführungsrate von dreiwertigem Eisen durch Steuern der volumetrischen Zuführungsrate von dreiwertigem Eisen zum Auslaugungsgefäß gesteuert wird.

10. Verfahren nach Anspruch 6 oder 7, wobei das Redoxpotenzial des Auslaugungsgefäßes durch Erhöhen der volumetrischen Zuführungsrate von dreiwertigem Eisen vom Eisen(III)-Generator zum Auslaugungsgefäß erhöht wird.

11. Verfahren nach Anspruch 6 bis 9, wobei das Redoxpotenzial durch Erhöhen des Dreiwertiges-Eisen-in-Zweiwertiges-Eisen-Verhältnisses im Eisen(III)-Generator durch Zuführen von mehr Sauerstoff zum Eisen(III)-Generator erhöht wird.

12. Verfahren nach Anspruch 1 bis 10, wobei die Betriebsbedingungen im Eisen(III)-Generator aufrechterhalten werden, so dass eine Eisenhydrolyse im Eisen(III)-Generator abläuft.

13. Verfahren nach Anspruch 1 bis 11, der die Ausfällung des wässrigen dreiwertigen Hydroxids bis zu dem Ausmaß einschließt, dass die gesamte aufgelöste Eisenkonzentration der den Eisen(III)-Generator verlassenden Lösung zumindest 1 g/l weniger als diejenige der Lösung beträgt, die in den Eisen(III)-Generator kommt.

14. Verfahren nach irgendeinem der Ansprüche 1 bis 10, wobei der Eisen(III)-Generator mit einem pH-Wert zwischen ungefähr 1,3 und ungefähr 1,7 zu betreiben ist.

15. Verfahren nach irgendeinem der Ansprüche 1 bis 12, wobei der Eisen(III)-Generator mit einer freien Schwefelsäurekonzentration zwischen 2 g/l und 5 g/l zu betreiben ist.

16. Verfahren nach Anspruch 11 oder 12, das ausgeführt wird, wobei die Konzentration von dreiwertigem Eisen in der Eisen(III)-Generator-Produktflüssigkeit, die dem Auslaugungsschritt zugeführt wird, zwischen ungefähr 5 g/l und ungefähr 30 g/l betragen soll.

17. Verfahren nach irgendeinem der Ansprüche 1 bis 13, wobei der Säureherstellungsschritt b) die Behandlung des Auslaugungsproduktstroms in einer elektrolytischen Metallgewinnungsanlage einschließt.

18. Verfahren nach irgendeinem der Ansprüche 1 bis 15, wobei der Auslaugungsproduktstrom in einer Fest/Flüssig-Trennvorrichtung behandelt wird, um ein flüssiges Produkt herzustellen, das flüssige Produkt im Metallgewinnungsschritt behandelt wird und die Fest/Flüssig-Trennvorrichtung einen Eindicker, eine Filtrierungsanlage, eine Zentrifuge oder einen Zyklon beinhaltet.

19. Verfahren nach Anspruch 18, wobei zumindest ein Teil des flüssigen Produkts von der zusätzlichen Fest/Flüssig-Trennvorrichtung im Säureherstellungsschritt b) behandelt wird.

20. Verfahren nach irgendeinem der Ansprüche 1 bis 19, wobei das Material Metall in einer oder mehreren Sulfid-, Metall- oder anderen gebundenen Formen einschließt.

## Revendications

1. Un procédé de lixiviation oxydante indirecte du cuivre à partir d'un matériau contenant du cuivre sous forme de sulfure. Ce procédé comporte au moins une étape de production d'acide et au moins une étape de consommation d'acide, ces deux opérations ayant lieu dans au moins deux récipients physiquement séparés. Le procédé se compose, dans l'ordre, des opérations suivantes :
a) oxydation du matériau en sulfure de cuivre avec du fer ferrique afin de transférer le pouvoir oxydant au matériau en sulfure de cuivre pour en lixivier le cuivre et pour réduire le fer ferrique en fer ferreux, le fer ferreux et le cuivre lixivié se trouvant dans un flux de produit de lixiviation ;
b) une opération de production d'acide consistant à récupérer le cuivre du flux de produit de lixiviation en retirant au moins une partie du cuivre lixivié avec une opération d'extraction par solvant et en formant un acide dans le flux de produit d'extraction par solvant ;
c) une opération de consommation d'acide dans un récipient physiquement séparé des récipients dans lesquels les réactions (a) et (b) ont lieu et qui utilise l'acide obtenu à l'étape b) pour oxyder le fer ferreux en fer ferrique dans un générateur de fer ferrique, avec réutilisation du fer ferrique à l'étape a) ;
le procédé supposant également l'hydrolyse du fer afin d'obtenir de l'hydroxyde ferrique aqueux ou un précurseur aqueux de n'importe quel oxy-hydroxyde de fer ou jarosite possible, conformément à la réaction chimique suivante : 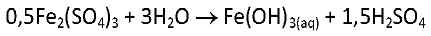 dans laquelle Fe₂(SO₄)₃ est du sulfate ferrique ; H₂O est de l'eau ; Fe(OH)_{3(aq)} est de l'hydroxyde ferrique en solution ; H₂SO₄ est de l'acide sulfurique et le rapport des moles de l'acide formé par moles de fer hydrolysés est le même pour la formation de n'importe lequel des oxy-hydroxydes de fer ou jarosites ;
et le retrait de l'excédent de fer du procédé par la précipitation de l'hydroxyde ferrique aqueux ou du précurseur aqueux de n'importe quel oxy-hydroxyde de fer ou jarosite possible, conformément à la réaction chimique générale suivante, laquelle peut avoir lieu soit complètement soit en partie dans le générateur de fer ferrique ou encore complètement dans toute autre partie du procédé : 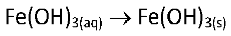 dans laquelle Fe(OH)_{3(aq)} est l'hydroxyde ferrique en solution ; et Fe(OH)₃₍ₛ₎ est l'hydroxyde ferrique précipité.

2. Un procédé selon la revendication 1, dans lequel le générateur de fer ferrique utilise la méthode de l'oxydation bactérienne du fer ferreux en fer ferrique ou de l'oxydation sous pression du fer ferreux en fer ferrique.

3. Un procédé selon la revendication 2, dans lequel le fer ferrique est utilisé sous la forme de sulfate ferrique, de chlorure ferrique ou de nitrate ferrique.

4. Un procédé selon n'importe laquelle des revendications 1 à 3, dans lequel l'étape a) comporte la
réaction chimique générale suivante : 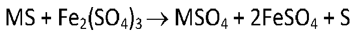 dans laquelle MS est du sulfure de cuivre, Fe₂(SO₄)₃ est du sulfate ferrique ; MSO₄ est du sulfate de cuivre en solution, FeSO₄ est du sulfate ferreux et S est du sulfure élémentaire ;
dans lequel l'étape de production d'acide b) comporte la réaction chimique générale suivante : 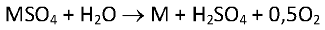 dans laquelle MSO₄ est du sulfure de cuivre en solution ; H₂O est de l'eau ; M est le cuivre récupéré ; H₂SO₄ est de l'acide sulfurique ; et O₂ est de l'oxygène ;
dans lequel l'étape de consommation d'acide c) comporte la réaction chimique générale suivante : 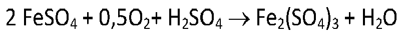 dans laquelle FeSO₄ est du sulfate ferreux ; O₂ est de l'oxygène ; H₂SO₄ est de l'acide sulfurique ; Fe₂(SO₄)₃ est du sulfate ferrique ; et H₂O est de l'eau.

5. Un procédé selon n'importe laquelle des revendications 1 à 4, dans lequel le générateur de fer ferrique comprend un lit de particules fluidisé ou un lit de particules agité mécaniquement contenant des bactéries d'oxydation minérale et dans lequel certaines des bactéries sont fixées aux particules du lit de particules et certaines des particules sont libres dans la solution.

6. Un procédé selon les revendications 1 à 4, dans lequel le générateur de fer ferrique est muni d'un réacteur de lixiviation à haute température ou de lixiviation sous pression pour réaliser l'oxydation du fer ferreux en fer ferrique.

7. Un procédé selon les revendications 1 à 4, dans lequel le générateur de fer ferrique comporte un amas minéral, un tas de minerai ou autre matériau approprié, qui peut être éliminé et remplacé quand il devient saturé en fer précipité.

8. Un procédé selon n'importe laquelle des revendications 1 à 7, dans lequel le potentiel d'oxydoréduction du récipient de lixiviation est contrôlé à l'aide du taux de transfert de fer ferrique au récipient de lixiviation et le taux d'alimentation en fer ferrique est contrôlé en surveillant le rapport fer ferrique/fer ferreux maintenu dans le générateur de fer ferrique et transféré au récipient de lixiviation.

9. Un procédé selon n'importe laquelle des revendications 1 à 7, dans lequel le potentiel d'oxydoréduction du récipient de lixiviation est contrôlé à l'aide du taux de transfert de fer ferrique au récipient de lixiviation et le taux d'alimentation en fer ferrique est contrôlé en surveillant le taux de transfert volumétrique de fer ferrique au récipient de lixiviation.

10. Un procédé selon la revendication 6 ou 7, dans lequel le potentiel d'oxydo-réduction du récipient de lixiviation augmente lorsqu'on accroît le taux de transfert volumétrique de fer ferrique du générateur de fer ferrique au récipient de lixiviation.

11. Un procédé selon les revendications 6 à 9, dans lequel le potentiel d'oxydo-réduction augmente lorsqu'on accroît le rapport fer ferrique/fer ferreux dans le générateur de fer ferrique en fournissant davantage d'oxygène au générateur de fer ferrique.

12. Un procédé selon les revendications 1 à 10, dans lequel les conditions de fonctionnement dans le générateur de fer ferrique sont maintenues telles que l'hydrolyse du fer a lieu à l'intérieur du générateur de fer ferrique.

13. Un procédé selon les revendications 1 à 11 qui suppose la précipitation de l'hydroxyde ferrique aqueux de manière telle que la concentration totale en fer dissous de la solution qui sort du générateur de fer ferrique est d'au moins 1 g/l inférieure à celle de la solution qui entre dans le générateur de fer ferrique.

14. Un procédé selon n'importe laquelle des revendications 1 à 10, dans lequel le générateur de fer ferrique doit être utilisé avec un pH situé entre environ 1,3 et environ 1,7.

15. Un procédé selon n'importe laquelle des revendications 1 à 12, dans lequel le générateur de fer ferrique doit être utilisé avec une concentration en acide sulfurique libre située entre 2 g/l et 5 g/l.

16. Un procédé selon la revendication 11 ou 12 utilisé avec une concentration en fer ferrique du liquide obtenu du générateur de fer ferrique et utilisé pour la lixiviation située entre environ 5 g/l et environ 30 g/l.

17. Un procédé selon n'importe laquelle des revendications 1 à 13, dans lequel l'étape de production d'acide b) suppose le traitement du flux de produit de lixiviation dans un appareil d'électro-extraction.

18. Un procédé selon n'importe laquelle des revendications 1 à 15, dans lequel le flux de produit de lixiviation est traité dans un séparateur solide-liquide afin d'obtenir un produit liquide, le produit liquide est traité au cours de l'étape d'électro-extraction de métal et le séparateur solide-liquide comporte un épaississeur, un dispositif de filtration, une centrifugeuse ou un cyclone.

19. Un procédé selon la revendication 18, dans lequel au moins une partie du produit liquide résultant du séparateur solide-liquide supplémentaire est traitée au cours de l'étape de production d'acide b).

20. Un procédé selon n'importe laquelle des revendications 1 à 19, dans lequel le matériau inclut du métal sous une ou plusieurs formes : sulfure, métallique ou autre forme liée.
